# FASCICULE DE BREVET EUROPEEN

(11) **EP 2 507 726 B1**
(45) Date de publication et mention de la délivrance du brevet: **23.04.2014**
(21) Numéro de dépôt: 10749668.9
(22) Date de dépôt: 08.09.2010
(51) Int. Cl.: G06F 17/30

(54) **PROCEDE DE GENERATION D'UN RESULTAT D'UNE RECHERCHE EFFECTUEE AU MOYEN D'UN MOTEUR DE RECHERCHE**
VERFAHREN ZUR ERZEUGUNG EINES SULTATS AUS EINER SUCHMASCHINENRECHERCHE
METHOD OF GENERATING A RESULT FROM A SEARCH ENGINE SEARCH

(30) Priorité: 02.12.2009 FR 0958596
(43) Date de publication de la demande: 10.10.2012
(73) Titulaire: Sagemcom Broadband SAS, 92500 Rueil Malmaison (FR)
(72) Inventeur: MORARD, Jean-Pierre, F-92500 Rueil-Malmaison (FR)
(74) Mandataire: Camus, Olivier Jean-Claude
(86) Numéro de dépôt international: PCT/EP2010/063197
(87) Numéro de publication internationale: WO 2011/067002

(56) Documents cités:
- US-A1- 2008 077 569
- KENNETH TREHARNE ET AL: "Search Engine Result Visualisation: Challenges and Opportunities" INFORMATION VISUALISATION, 2009 13TH INTERNATIONAL CONFERENCE, IEEE, PISCATAWAY, NJ, USA, 15 juillet 2009 (2009-07-15), pages 633-638, XP031500303 ISBN: 978-0-7695-3733-7

## Description

### DOMAINE TECHNIQUE DE L'INVENTION

La présente invention a pour objet un procédé de génération d'un résultat d'une recherche effectuée au moyen d'un moteur de recherche. La présente invention a essentiellement pour but d'améliorer la lisibilité des résultats d'une recherche informatique lancée au moyen d'un moteur de recherche, notamment sur le réseau Internet.

Le domaine de l'invention est, d'une façon générale, celui de la recherche d'informations sur un réseau de communication. L'invention peut être mise en oeuvre sur tout réseau de communication utilisant des moteurs de recherche renvoyant notamment des informations visuelles ; les informations visuelles considérées sont ici de type vignettes. L'invention sera décrite dans le cas où le réseau de communication considéré est le réseau Internet, réseau auquel un utilisateur accède au moyen d'un navigateur Internet ; réseau sur lequel l'utilisateur peut effectuer une recherche au moyen d'un moteur de recherche. L'invention peut néanmoins être mise en oeuvre sur d'autres types de réseaux, par exemple des réseaux Intranet d'entreprises.

### ARRIERE-PLAN TECHNOLOGIQUE DE L'INVENTION

De plus en plus de documents sont aujourd'hui numérisés et accessibles au moyen de moteurs de recherche. Une conséquence immédiate de l'augmentation du nombre de documents numérisés et accessibles en ligne est l'augmentation du nombre de résultats obtenus lorsqu'une recherche est effectuée au moyen d'un navigateur Internet, par exemple au moyen de mots clés. Si les résultats obtenus présentent en conséquence un caractère relativement exhaustif, il est de plus en plus difficile pour un utilisateur de retrouver, parmi la liste de résultats issus de la recherche, l'information souhaitée. Certains moteurs de recherche parviennent à hiérarchiser la pertinence des résultats trouvés, mais il demeure toujours une étape manuelle que doit accomplir l'utilisateur pour sélectionner, parmi la liste de résultats obtenus, les résultats qui l'intéressent vraiment.

Pour faciliter cette étape manuelle, certains navigateurs, qui retournent le plus souvent une liste de résultats sous la forme d'une ligne de texte associée à une URL, complètent les résultats issus de la recherche par une image de type vignette. Par vignette, on désigne une image de taille réduite permettant d'identifier visuellement le résultat auquel il est associé. Par exemple, une vignette peut être constituée par l'image de la pochette d'un disque ou de la couverture d'un livre. La taille de la vignette est volontairement réduite de manière à pouvoir être positionnée par exemple dans le prolongement d'un texte associé au résultat de la recherche, et pour pouvoir maintenir la possibilité d'afficher simultanément, de manière visible sur un écran, un nombre significatif de résultats de la recherche. Dans certains cas, la vignette constitue en elle-même une ligne de résultat de la recherche effectuée, en n'étant pas associée à une ligne de texte. Une vignette peut donc, à l'issue d'une recherche, apparaitre soit directement, soit en étant associée à une information de type adresse URL.

Une difficulté perdure cependant : en dépit de l'utilisation de vignettes, les résultats d'une recherche effectuée par un moteur de recherche peuvent être présentés de manière relativement désordonnée, et difficilement exploitable par un utilisateur. Pourtant, dans la plupart des cas, ces résultats comportent des familles de résultats, chacune des familles de résultat correspondant à des résultats désignant des éléments comparables. Mais ces familles de résultats ne sont, dans la pratique, pas regroupées.

Ainsi, par exemple, si un utilisateur cherche un album particulier, dont il a oublié le titre, d'un artiste donné, il va saisir dans la fenêtre appropriée de son moteur de recherche le nom de l'artiste. Les différents albums vont alors apparaitre dans la liste de résultats ; mais les différents résultats pour un album donné de l'artiste considéré n'apparaitront pas forcément groupés, par exemple dans des lignes successives du résultat de la recherche ; un même album peut en effet être référencé avec des URL différentes qui ne se succèderont pas nécessairement dans la liste de résultats. Par ailleurs, il se peut qu'il existe de petites variantes pour un même album, au niveau de la pochette ; c'est le cas par exemple entre des éditions "simples" d'un album et des éditions "collector ; il n'en reste pas moins que les différentes éditions d'un même album correspondent à la même oeuvre d'un artiste, et qu'il peut donc apparaitre intéressant de les regrouper dans une liste de résultats produite par un moteur de recherche, afin de faciliter les recherches de l'utilisateur. L'exemple qui vient d'être décrit avec les albums d'un artiste est facilement transposable, dans le cadre de l'invention, à d'autres éléments, tels que des livres, des DVD, ou autres...

Le brevet US2008/0077569 A1 divulgue un procédé de recherche, regroupant les résultats et donnant une image représentatif aux groupes ainsi trouvés. Ledit brevet n'utilise pas d'étapes de comparaison des images mêmes.

### DESCRIPTION GENERALE DE L'INVENTION

Le procédé selon l'invention propose une solution au problème qui vient d'être exposé. Dans l'invention, on propose une solution pour que les vignettes générées lorsqu'une recherche est lancée au moyen d'un moteur de recherche soient regroupées par famille d'éléments dans la liste de résultats produite par le moteur de recherche. Par famille d'éléments, on désigne une pluralité d'éléments dont les vignettes associées présentent une ressemblance telle qu'on considère qu'elles désignent le même objet. A cet effet, on propose de réaliser une opération de comparaison entre les différentes vignettes issues de la recherche, et de regrouper entre elles les vignettes similaires, présentant de fortes ressemblances, afin de rendre plus lisible par l'utilisateur le résultat de la recherche.

L'invention concerne donc essentiellement un procédé de génération d'un résultat d'une recherche effectuée au moyen d'un moteur de recherche, dans laquelle une liste de résultats est établie suite à ladite opération de recherche, caractérisé en ce que ledit procédé comporte les différentes étapes consistant à :
- identifier des images de type vignettes associées à des résultats illustrés de la liste de résultats ;
- réaliser une opération d'analyse d'images consistant à comparer deux à deux les images de type vignettes identifiés ;
- regrouper par familles d'images les images de type vignettes présentant entre elles une similarité déterminée par l'opération de comparaison des images de type vignettes ;
- générer le résultat de la recherche en fonction des regroupements en familles d'images.

Dans la pratique, on considère que deux images présentent entre elles une similarité si elles représentent effectivement un même objet, les images pouvant présenter entre elles des différences de l'ordre du détail. Typiquement, on peut considérer que deux images sont similaires entre elles si, ramenées dans un même format et à des dimensions identiques, moins de 20% des pixels constituant les deux images présentent des valeurs de composantes différentes.

Le procédé selon l'invention peut comporter, en plus des étapes principales qui viennent d'être mentionnées dans le paragraphe précédent, une ou plusieurs caractéristiques supplémentaires parmi les suivantes:
- l'opération de comparaison est effectuée au moyen d'un encodeur ;
- l'encodeur est de type H264 ;
- l'opération de comparaison réalisée au moyen de l'encodeur comporte les différentes étapes consistant à :
   - constituer tous les couples possibles d'images de type vignettes à partir des images de type vignettes identifiées ;
   - pour chaque couple d'images constitué, procéder à une opération d'encodage dudit couple d'images au moyen de l'encodeur ;
   - déduire de l'opération d'encodage des variations entre les deux images du couple d'images ;
   - quantifier les variations entre les deux images du couple d'images considéré pour obtenir une valeur de quantification ;
   - si la valeur de quantification du couple d'images considéré est inférieure à un seuil de variation préalablement déterminé, regrouper les deux images du couple d'images dans une même famille d'images ;
- préalablement à l'étape d'analyse d'images, ledit procédé comporte l'étape consistant à accéder à une image haute résolution associée à chaque vignette identifiée, l'étape d'analyse d'images étant alors effectuée sur les images haute résolution ;
- préalablement à l'étape d'analyse d'images, ledit procédé comporte l'étape consistant à convertir les images de type vignettes identifiées dans un même format d'images ;
- le format d'images dans lequel sont converties les images de type vignettes identifiées est le format YUV ;
- l'étape consistant à identifier les images de type vignettes associées à des résultats illustrés de la liste de résultats est réalisée sur un nombre préalablement déterminé de résultats de ladite liste de résultats.

Les différentes caractéristiques supplémentaires du procédé selon l'invention, dans la mesure où elles ne s'excluent pas mutuellement, sont combinées selon toutes les possibilités d'association pour aboutir à différents exemples de mise en oeuvre de l'invention.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, un diagramme illustrant un exemple de mise en oeuvre du procédé selon l'invention ;
- à la figure 2, une représentation schématique d'une génération de résultats d'une recherche réalisée au moyen d'un moteur de recherche selon l'invention ;
- à la figure 3, une représentation d'un tableau de valeurs illustrant le regroupement des images par familles d'images.

### DESCRIPTION DES FORMES DE REALISATION PREFEREES DE L'INVENTION

Les éléments apparaissant sur différentes figures auront conservé, sauf précision contraire, les mêmes références.

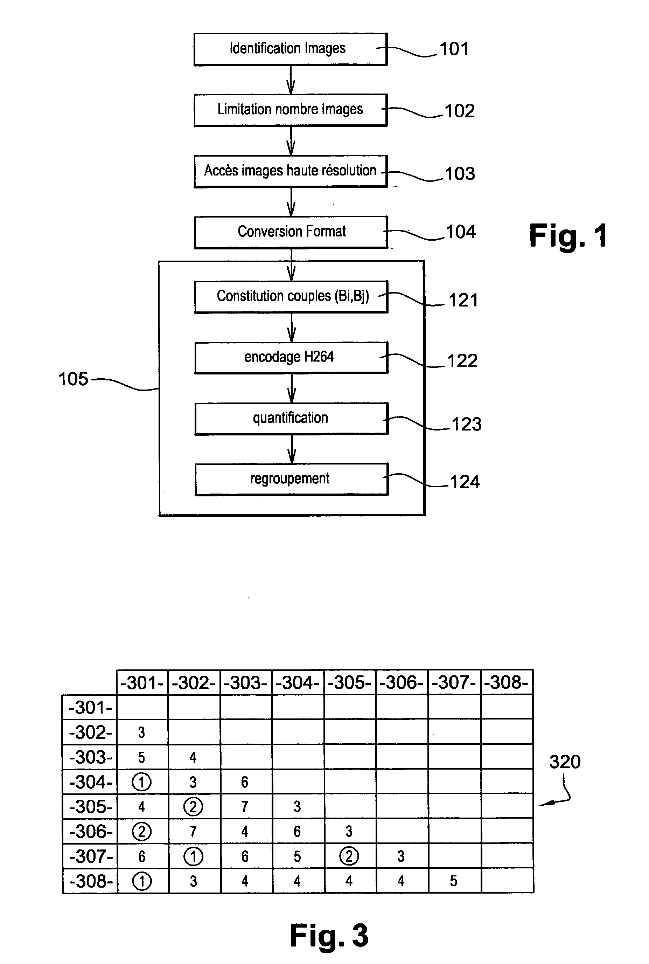

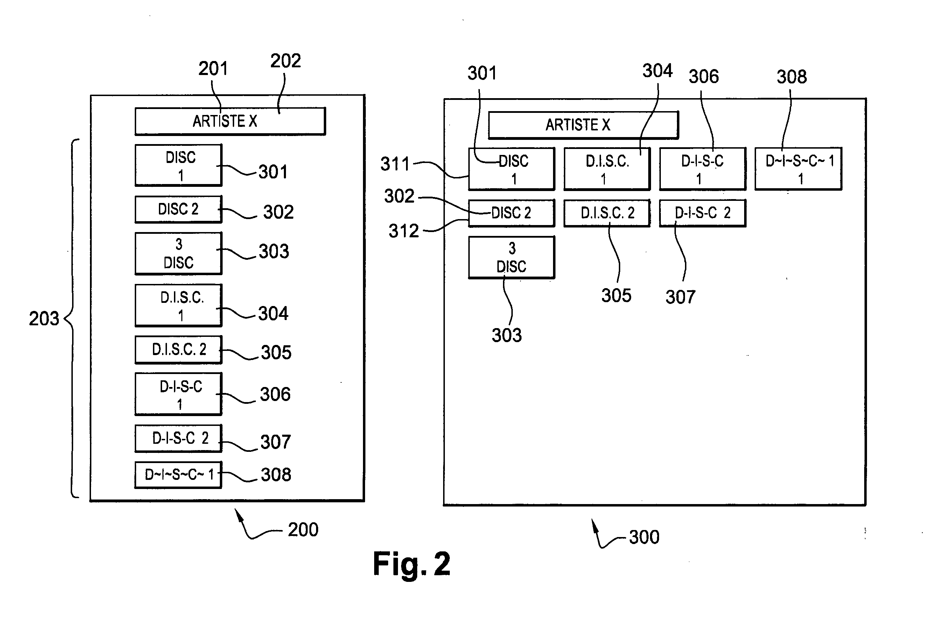

La figure 1 représente un diagramme illustrant un exemple de mise en oeuvre du procédé selon l'invention ; différentes étapes dudit diagramme organisant le procédé de génération d'un résultat d'une recherche étant illustrées sur la figure 2.
Les figures 1 et 2 seront donc décrites conjointement.

La présente invention est décrite dans le cadre d'une recherche effectuée par un utilisateur au moyen d'un moteur de recherche sur le réseau Internet.

Sur la figure 2, on a représenté un premier écran 200 et un deuxième écran 300 représentant les résultats d'une recherche respectivement avant la mise en oeuvre du procédé selon l'invention, et après la mise en oeuvre du procédé selon l'invention. Dans l'exemple représenté, l'utilisateur lance une recherche en tapant un ensemble de mots clés 201, ici "artiste X", dans un champ 202 d'un moteur de recherche. L'utilisateur obtient alors une liste de résultats 203, correspondant à des pochettes de disques, qui sont classés hiérarchiquement selon des méthodes propres à chaque moteur de recherche. Dans l'exemple illustré, la liste de résultats 203 se limite, par soucis de simplification, à des vignettes, les textes associés à des adresses URL éventuellement présents dans la pratique ayant été omis. On considère donc ici que la liste de résultats est exclusivement composée de résultats illustrés, c'est-à-dire de résultats associés à une vignette. Toujours par soucis de simplification, la liste de résultats 203 se limite à une liste de huit résultats, référencés 301 à 308 dans leur ordre de présentation sur l'écran. Dans la pratique, le nombre de résultats est très souvent beaucoup plus important, et l'utilisation de vignettes doit être un outil de discrimination dans la sélection des résultats intéressants par l'utilisateur.

Dans l'exemple représenté, trois albums sont répertoriés pour l'artiste X ; un premier album porte la mention "Disc 1 (vignettes 301 ; 304 ; 306 et 308), un deuxième album porte la mention "Disc 2" (vignettes 302 ; 305 et 307), et un troisième album porte la mention "Disc 3" (vignette 303). Comme on peut le constater, les différents albums apparaissent dans la liste de résultats de façon désordonnée : les occurrences différentes d'un album considéré n'étant pas regroupées dans la liste de résultats, ce qui est peu pratique pour un utilisateur, notamment lorsque la liste de résultats 203 comporte un grand nombre de résultats.

Comme illustré à la figure 1, pour générer un résultat de recherche selon un exemple de mise en oeuvre du procédé selon l'invention, on procède donc, dans une première étape 101, à une opération d'identification des images de type vignettes dans la liste de résultats 203. Une telle opération peut être réalisée par des opérations de traitement d'images classiques, ou par identifications d'URL associées à des vignettes. Dans un mode de mise en oeuvre particulier de l'invention, on limite, dans une étape suivante 102, l'identification des vignettes à un nombre préalablement déterminé, par exemple cinquante, afin de limiter la quantité de calculs intervenant par la suite, et en considérant qu'une telle limitation facilitera la tâche de l'utilisateur dans la sélection des résultats qui l'intéressent effectivement. Dans l'exemple considéré, on se limite aux huit vignettes précédemment mentionnées.

Avantageusement, dans une étape suivante 103, on procède à une opération d'accès à d'images haute résolution associées aux vignettes considérées. A cet effet, on peut par exemple utiliser l'URL associée à la vignette considérée.

Dans une étape suivante 104, on procède à une opération de conversion des images de type vignettes (le cas échéant dans leur version haute résolution) depuis leur format d'origine (jpeg, gif...) vers un format directement utilisable par un dispositif de type encodeur. Un tel format est par exemple le format YUV 4 :2 :0, ou le format RGB...

Dans une étape suivante 105, on procède à une étape d'analyse d'images sur la base des images converties. Dans l'exemple considéré, cette étape comporte les différentes opérations suivantes :
- une opération 121 de constitution de couples d'images, en combinant selon toutes les possibilités toutes les images identifiées ; ainsi, dans l'exemple considéré, à partir de huit vignettes identifiées, on obtient 28 couples de deux images (Bi, Bj), avec i et j appartenant à l'ensemble {1-8}.
- une opération 122 au cours de laquelle les couples (Bi, Bj) sont encodés par un décodeur de type H264 ; dans d'autres exemples de mise en oeuvre, l'encodeur peut être de type VC1, ou de type Dirac. On obtient alors en sortie de l'encodeur, pour chaque couple (Bi, Bj) encodé, un ensemble d'informations se présentant sous la forme d'une succession de données comme suit : {Ri, P(i,1), P(i,2),...,P(i,m)}, où Ri est le format compressé de l'image Bi, et les données P(i,m) sont des données révélatrices de changement observés entre l'image Bj et l'image Bi, la valeur m correspondant au nombre de zones (généralement rectangulaires) de l'image où des variations entre l'image Bi et l'image Bj ont été observées.
- une opération 123 au cours de laquelle on quantifie, pour chaque couple d'images (Bi, Bj) ayant subi l'opération d'encodage, les différences observées entre l'image Bi et l'image Bj ; à cet effet, on considère l'ensemble d'informations {Ri, P(i,1), P(i,2),...,P(i,m)}, et on procède, pour chaque couple (Bi, Bj) encodé, à la somme de l'ensemble des données P(i,m) pour obtenir une valeur dite valeur de différenciation. Plus cette valeur est faible, plus la ressemblance entre les images Bi et Bj est importante.
- une opération 124 de regroupement d'images, au cours de laquelle les images Bi et Bj qui, après les opérations qui viennent d'être décrites, présentent une valeur de différentiation inférieure, ou inférieure ou égale, à un seuil préalablement déterminé, sont regroupées dans une même famille d'images. Les images regroupées dans une même famille d'images sont alors considérées comme présentant entre elles une similarité.

La figure 3 illustre schématiquement la constitution des familles d'images. Sur cette figure, on a représenté un tableau 320, chaque ligne du tableau, et chaque colonne du tableau, correspondant à une des huit vignettes 301 à 308. L'intersection d'une ligne associée à une vignette et d'une colonne associée à une autre vignette donne une valeur dite valeur de comparaison calculée- selon la méthode qui vient d'être décrite. Ainsi, l'opération de regroupements d'images est effectuée en regroupant les images pour lesquelles la valeur de comparaison est inférieure à une valeur seuil préalablement déterminée.

Dans l'exemple considéré, on décide de prendre comme valeur seuil la valeur 2. Ainsi, comme visible sur la figure 2 au niveau de l'écran 300, où on a représenté schématiquement le résultat de la recherche généré suite à la mise en oeuvre du procédé selon l'invention :
- les vignettes 301, 304, 306 et 308 sont regroupées sur une même ligne pour former une première famille d'images 311; en effet, les seules différences entre ces vignettes consiste en la présence de symboles entre les différentes lettres du mot "Disc", ces vignettes étant identiques en tout autre point ;
- les vignettes 302, 305 et 307 sont regroupées sur une même ligne pour former une deuxième famille d'images 312; en effet, les seules différences entre ces vignettes consiste en la présence de symboles entre les différentes lettres du mot "Disc", ces vignettes étant identiques en tout autre point.

L'utilisateur peut ainsi plus facilement repérer les objets recherchés.

## Revendications

1. Procédé de génération d'un résultat d'une recherche effectuée au moyen d'un moteur de recherche, dans laquelle une liste de résultats est établie suite à ladite opération de recherche, **caractérisé en ce que** ledit procédé comporte les différentes étapes consistant à :
- identifier (101) des images de type vignettes (301-308) associées à des résultats illustrés de la liste de résultats ;
- réaliser une opération d'analyse (105) d'images consistant à comparer deux à deux les images de type vignettes identifiés ;
- regrouper (124) par familles d'images (311 ;312) les images de type vignettes présentant entre elles une similarité déterminée par l'opération de comparaison des images de type vignettes ;
- générer le résultat de la recherche en fonction des regroupements en familles d'images.

2. Procédé selon la revendication précédente **caractérisé en ce que** l'opération de comparaison est effectuée au moyen d'un encodeur.

3. Procédé selon la revendication précédente **caractérisé en ce que** l'encodeur est de type H264.

4. Procédé selon l'une quelconque des revendications 2 ou 3 **caractérisé en ce que** l'opération de comparaison réalisée au moyen de l'encodeur comporte les différentes étapes consistant à :
- constituer (121) tous les couples possibles d'images (Bi, Bj) de type vignettes à partir des images de type vignettes identifiées ;
- pour chaque couple d'images constitué, procéder (122) à une opération d'encodage dudit couple d'images au moyen de l'encodeur ;
- déduire de l'opération d'encodage des variations entre les deux images du couple d'images ;
- quantifier (123) les variations entre les deux images du couple d'images considéré pour obtenir une valeur de quantification ;
si la valeur de quantification du couple d'images considéré est inférieure à un seuil de variation préalablement déterminé, regrouper (124) les deux images du couple d'images dans une même famille d'images.

5. Procédé selon l'une quelconque des revendications précédentes **caractérisé en ce que**, préalablement à l'étape d'analyse d'images, ledit procédé comporte l'étape consistant à accéder (103) à une image haute résolution associée à chaque vignette identifiée, l'étape d'analyse d'images étant alors effectuée sur les images haute résolution.

6. Procédé selon l'une quelconque des revendications précédentes **caractérisé en ce que**, préalablement à l'étape d'analyse d'images, ledit procédé comporte l'étape consistant à convertir (104) les images de type vignettes identifiées dans un même format d'images.

7. Procédé selon la revendication précédente **caractérisé en ce que** le format d'images dans lequel sont converties les images de type vignettes identifiées est le format YUV.

8. Procédé selon l'une quelconque des revendications précédentes **caractérisé en ce que** l'étape consistant à identifier les images de type vignettes associées à des résultats illustrés de la liste de résultats est réalisée (102) sur un nombre préalablement déterminé de résultats de ladite liste de résultats.

## Patentansprüche

1. Verfahren zum Generieren eines Ergebnisses einer Suche, die anhand einer Suchmaschine durchgeführt wird, bei der im Anschluss an die genannte Suchoperation eine Ergebnisliste erstellt wird, **dadurch gekennzeichnet, dass** das genannte Verfahren die unterschiedlichen Stufen umfasst, bestehend aus:
- der Identifizierung (101) der Bilder vom Typ Thumbnail (301-308), die den dargestellten Ergebnissen der Ergebnisliste zugeordnet sind;
- der Realisierung einer Analyseoperation (105) von Bildern, bestehend aus dem Vergleich von jeweils zwei Bildern vom Typ identifizierte Thumbnails;
- der Zusammenfassung (124) der Bilder vom Typ Thumbnail nach Bilderfamilien (311; 312), die untereinander eine durch die Vergleichsoperation der Bilder vom Typ Thumbnail bestimmte Ähnlichkeit aufweisen;
- dem Generieren des Ergebnisses der Suche in Abhängigkeit von den Zusammenfassungen in Bilderfamilien.

2. Verfahren gemäß dem voranstehenden Anspruch, **dadurch gekennzeichnet, dass** die Vergleichsoperation anhand eines Encoders durchgeführt wird.

3. Verfahren gemäß dem voranstehenden Anspruch, **dadurch gekennzeichnet, dass** der Encoder vom Typ H264 ist.

4. Verfahren gemäß Anspruch 2 oder 3, **dadurch gekennzeichnet, dass** die anhand des Encoders realisierte Vergleichsoperation die unterschiedlichen Stufen umfasst, bestehend aus:
- der Zusammenstellung (121) aller möglicher Bilderpaare (Bi, Bj) vom Typ Thumbnails aus den Bildern vom Typ identifizierter Thumbnails;
- der Vornahme (122) einer Kodierungsoperation des genannten Bilderpaares anhand des Encoders für jedes zusammengestellte Bilderpaar;
- der Deduktion der Abweichungen zwischen den zwei Bildern des Bilderpaares aus der Kodierungsoperation;
- der Quantifizierung (123) der Abweichungen zwischen den zwei Bildern des betrachteten Bilderpaares zwecks Erhalts eines Quantifizierungswertes;
- der Zusammenfassung (124) der zwei Bilder des Bilderpaares in einer und derselben Bilderfamilie, wenn der Quantifizierungswert des betrachteten Bilderpaares unter einem zuvor bestimmten Abweichungsschwellenwert liegt.

5. Verfahren gemäß einem der voranstehenden Ansprüche, **dadurch gekennzeichnet, dass** das genannte Verfahren vor der Stufe der Bildanalyse die Stufe umfasst, die in dem Zugreifen (103) auf ein jedem identifizierten Thumbnail zugeordneten Bild mit hoher Auflösung besteht, wobei die Stufe der Bildanalyse dann an den Bildern mit hoher Auflösung durchgeführt wird.

6. Verfahren gemäß einem der voranstehenden Ansprüche, **dadurch gekennzeichnet, dass** das genannte Verfahren vor der Stufe der Bildanalyse die Stufe umfasst, die in dem Konvertieren (104) der Bilder vom Typ identifizierte Thumbnails in ein und dasselbe Format umfasst.

7. Verfahren gemäß dem voranstehenden Anspruch, **dadurch gekennzeichnet, dass** das Bildformat, in das die Bilder vom Typ identifizierte Thumbnails konvertiert werden, das Format YUV ist.

8. Verfahren gemäß einem der voranstehenden Ansprüche, **dadurch gekennzeichnet, dass** die Stufe, die in der Identifikation der Bilder vom Typ den dargestellten Ergebnissen der Ergebnisliste zugeordneten Thumbnails besteht an einer Anzahl von zuvor bestimmten Ergebnissen der genannten Ergebnisliste realisiert wird (102).

## Claims

1. Method of generating a result of a search made using a search engine, in which a list of results is produced following said search operation, **characterised in that** said method comprises the following different steps:
- identify (101) thumbnail type images (301-308) associated with illustrated results in the results list;
- make an analysis (105) of images consisting of comparing the identified thumbnail type images in pairs;
- group (124) thumbnail type images with a similarity determined by the operation to compare these thumbnail type images, by image family (311; 312);
- generate the search result based on the result of forming groups of image families.

2. Method according to the previous claim, **characterised in that** the comparison operation is done using an encoder.

3. Method according to the previous claim, **characterised in that** the encoder type is H264.

4. Method according to either claim 2 or 3, **characterised in that** the comparison operation made using the encoder comprises the following different steps:
- create (121) all possible image pairs (Bi, Bj) of the thumbnail type starting from identified thumbnail type images;
- for each pair of images formed, perform (122) an encoding operation of said pair of images using the encoder;
- deduce variations between the two images in the pair of images, from the encoding operation;
- quantify (123) the variations between the two images in the pair of images considered to obtain a quantification value;
- if the quantification value of the pair of images considered is less than a previously determined variation threshold, group (124) the two images in the pair of images in a single image family.

5. Method according to any one of the previous claims, **characterised in that** before the image analysis step is performed, said method comprises the step consisting of accessing (103) a high resolution image associated with each identified thumbnail, the image analysis step then being performed on the high resolution images.

6. Method according to any one of the previous claims, **characterised in that** said method comprises a step consisting of converting (104) thumbnail type images identified in a single image format, before the image analysis step.

7. Method according to the previous claim, **characterised in that** the image format into which the identified thumbnail type images are converted is the YUV format.

8. Method according to any one of the previous claims, **characterised in that** the step consisting of identifying thumbnail type images associated with illustrated results in the results list is made (102) on a previously determined number of results in said results list.
